Europäisches Patentamt

European Patent Office

Office européen des brevets

(11) Publication number: **0 202 229**
**B1**

# EUROPEAN PATENT SPECIFICATION

(45) Date of publication of patent specification: **27.12.90**

(21) Application number: **85901028.2**

(22) Date of filing: **18.02.85**

(86) International application number:
**PCT/GB85/00067**

(87) International publication number:
**WO 85/03618 29.08.85 Gazette 85/19**

(51) Int. Cl.⁵: **A 01 C 5/06, A 01 B 23/02, B 22 F 7/08, C 04 B 37/02**

(54) PRECISION SEED DRILLS.

(30) Priority: **17.02.84 GB 8404174**

(43) Date of publication of application:
**26.11.86 Bulletin 86/48**

(45) Publication of the grant of the patent:
**27.12.90 Bulletin 90/52**

(84) Designated Contracting States:
**AT BE CH DE FR GB LI LU NL SE**

(56) References cited:
**WO-A-82/04375**
**FR-A- 857 996**
**FR-A-2 186 809**
**FR-A-2 427 763**
**US-A-3 125 169**

**Power Farming, vol. 58, no. 10, October 1979;
S.D. Howe: "It's a hard life", pages 89 and 96**

(73) Proprietor: **STANHAY WEBB LIMITED
Swan Lane Exning
Newmarket Suffolk CB8 7HD (GB)**

(72) Inventor: **HOLLAND, Simon Jeffree Roy Hestair
Farm Equipment
Limited Swan Lane Exning
Newmarket Suffolk CB8 7HD (GB)**
Inventor: **FOLEY, Andrew George National
Institute of
Agricultural Engineering Wrest Park
Silsoe Bedford MK45 4HS (GB)**
Inventor: **McLEES, Vernon Alister National
Intitute of
Agricultural Engineering Wrest Park
Silsoe Bedford MK45 4HS (GB)**
Inventor: **LAWTON, Peter James National
Institute of
Agricultural Engineering Wrest Park
Silsoe Bedford MK45 4HS (GB)**

(74) Representative: **Archer, Philip Bruce et al
Urquhart-Dykes & Lord, Trinity Court, Trinity
Street, Priestgate
Peterborough, Cambridgeshire PE1 1DA (GB)**

## Description

This invention relates to precision seed drills and to furrow opening coulters therefor.

Examples of precision seed drills, being agricultural or horticultural seed drills of the kind to which the present invention relates, are drills for sowing vegetable seeds comprising cell wheel or belt or pneumatic-type seed selection mechanisms, such as the well known "Webb" and "Stanhay" seed drills. The trade mark "Stanhay" is a registered trade mark of Stanhay Webb Limited.

More specifically, the expression "precision seed drill" as used in this specification is intended to mean an agricultural or horticultural seed drill comprising a seed reservoir, and a seed selection mechanism, the seed selection mechanism comprising a drivable seed selection member having individual seed receptors adapted to select seeds from the seed reservoir and to handle them one at a time and optionally including means to singulate seeds in or on said receptors, the seed selection mechanism being arranged to deliver seeds to a furrow opened by a coulter having a coulter body portion extending lengthwise of the furrow, the coulter being optionally followed by furrow closing means such as a press wheel, finger tines or the like.

As regards the seed selection mechanism, in addition to the cell wheel and belt type already mentioned there are pneumatic mechanisms employing positive or negative pressure differentials in relation to apertured disc or drum type seed pick-up members. In the case of one well known example of the drum-type mechanism, the drill is provided with a single centralised seed dispensing mechanism with delivery tubes extending to multiple row units. In the case of the plate type pneumatic selection mechanisms these are usually provided on the basis of one selection mechanism per row unit of the seed drill. Moreover, in addition to such pneumatic selection mechanisms there are the well known and somewhat old-fashioned plate type mechanisms used for many years in maize planters and the like, and the more recent so-called "plateless" mechanisms employing finger or spoon-type individual seed pick-up elements.

In the case of substantially all such precision type seed drills, each row unit has its own furrow opening coulter in which the coulter body extends lengthwise of the furrow opened and is subjected to very arduous operating conditions leading to rapid wear of the coulter body. The wear of the coulter body has two results.

Firstly, the initial V-section of the coulter loses its angular profile and eventually changes to approximately a round section. This causes the drill or furrow in the soil to be correspondingly profiled. It will be appreciated that when seeds are dropped into a furrow of this profile they will be likely to come to rest at various locations in the lower portion of the furrow, and not necessarily at bottom dead centre. This contrasts with the situation where the coulter is in its unworn state and has a V-section, since the corresponding V-section furrow produced strongly promotes seed deposition precisely at the apex of the V.

Secondly, the wear of the coulter body causes a reduction in drilling depth whereby the operator needs to make a depth adjustment in the coulter control mechanism, and this is time-consuming and reduces the cost-effectiveness of the drilling operation.

All in all, the rapid wear of existing coulter bodies leads to variability in drilling depth with corresponding variation in crop yield, and reductions in drilling efficiency.

This problem of coulter wear is to be clearly distinguished from that of non-precision type drills such as the conventional cereal crop drill in which the seed dispensing mechanism usually comprises a resilient or fluted roll which handles the seed as a flow or else in discrete seed bundles. Such drills usually have upright coulters such as tine coulters which are not subject to the same wear problem as the longitudinally extending precision drill type coulters discussed above.

Previous proposals for meeting this problem in relation to the coulters of precision seed drills include the provision of coulters having specially hardened zones and coulters which are readily detached and exchanged for a new coulter. However, these approaches to the problem by no means meet the farmer's needs since interchange of coulters is time-consuming and expensive, and the production of suitably hardened coulters by special metallurgical techniques is not really cost-effective having regard to the increase in coulter life obtained.

Thus, despite the fact that this wear problem for coulters of this type has existed for a great many years, it still remains to be solved and it is an object of the present invention to provide a precision seed drill and a coulter therefor offering improvements in one or more of the respects identified above.

GB—A—1181859 discloses a soil engaging member of a tillage tool as defined in the precharacterizing portion of claim 1.

According to the invention, a soil engaging member of a tillage tool as defined in the preamble of claim 1 is provided with the features of the characterising part of claim 1. In an embodiment described below, the soil engaging member is a coulter for a precision seed drill and has a metallic body portion and an inserted portion of ceramic material provided in a wearing region of the soil engaging member.

In the embodiment, the inserted portion of ceramic material is bonded by a suitable adhesive to the metallic structure of the coulter.

The profile of the insert is such as to correspond or complement and/or merge or blend with the contours of the external surface of the coulter body. The insert may also be provided with a soil engaging surface which, initially at least, stands somewhat proud with respect to the contours of the remainder of the coulter body so as to provide for a degree of wearing down of the insert surface during use.

The profile of the coulter in one embodiment is such as to include a narrow leading end or nose portion (at the forward end of the coulter with the respect to the operative direction of forward movement of the drill during use), and a wider mid-portion, followed by an open-bottomed rear portion or boot portion for seed deposition. It is in this latter portion that seeds from the seed selection mechanism are deposited either direct from the seed selection mechanism or via delivery tube.

Two embodiments of the invention will now be described by way of example with reference to the accompanying drawings in which:

Fig 1 shows a side elevation view of a coulter for a cell-wheel type precision seed drill; and

Fig. 2 shows a side elevation view of a coulter for a belt-type precision seed drill;

Figs. 3 to 9 show, in more detail, two further embodiments of the invention corresponding quite closely with those described above. In Figs. 3 to 9;

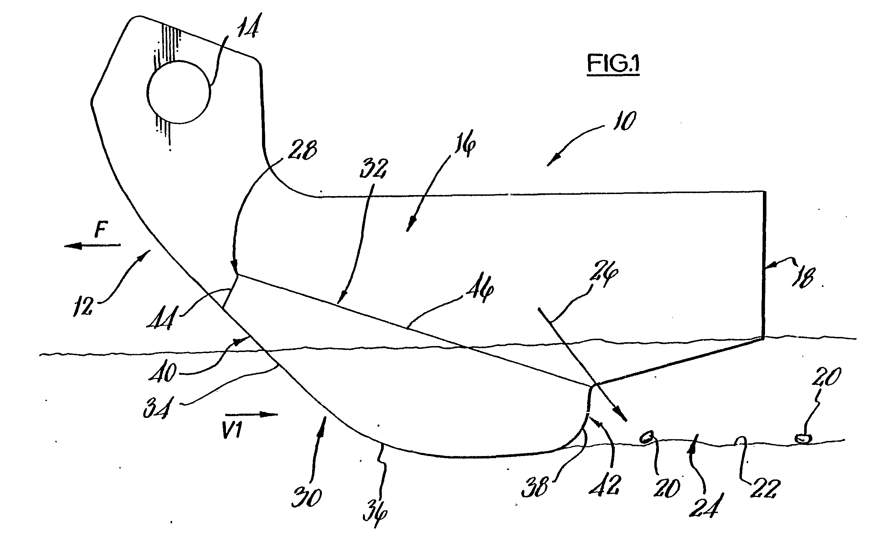

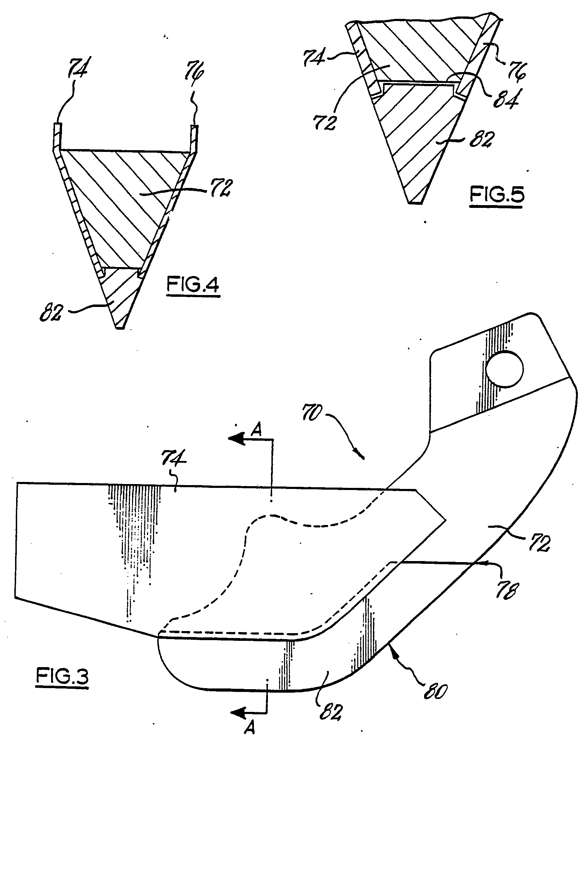

Fig. 3 shows a side elevation view of a coulter having certain features in common with the coulter of Fig 1;

Fig 4 shows a section on the line A—A in Fig 3;

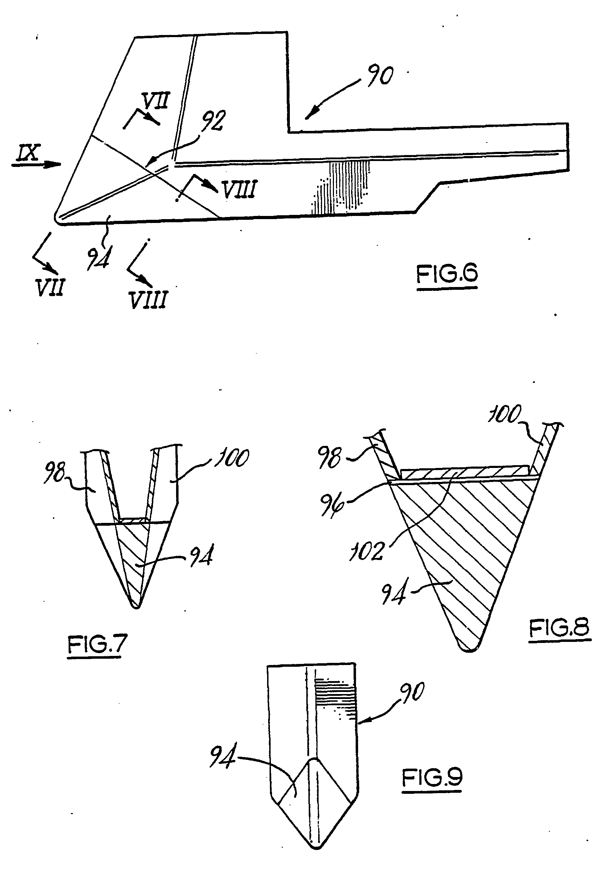

Fig. 5 shows, on a larger scale a portion of Fig 4;

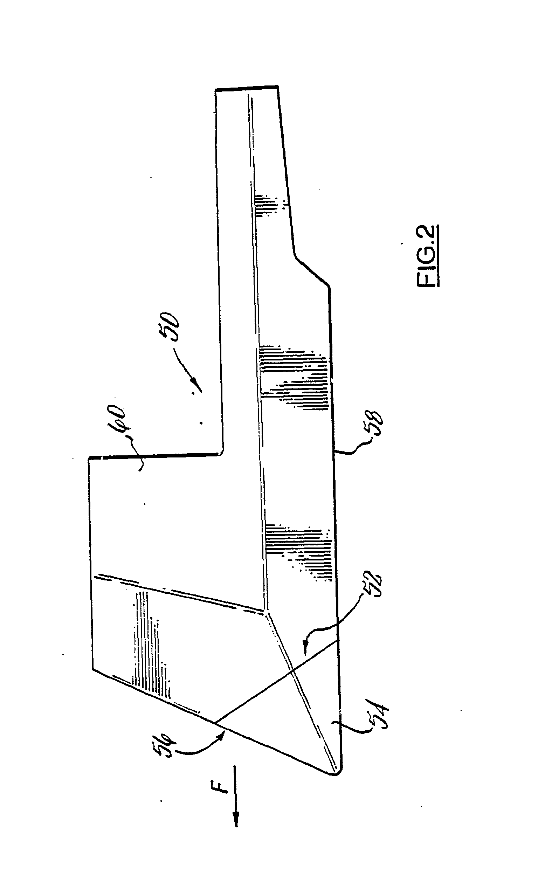

Fig 6 shows a side elevation view of a coulter having many features in common with the embodiment of Fig 2;

Fig 7 shows a section on the line VII—VII in Fig. 6;

Fig 8 shows, on a larger scale, a section on the line VIII—VIII in Fig 6; and

Fig 9 shows a front elevation view in the direction IX in Fig 6.

The coulter 10 of Fig. 1 forms part of a row unit of a multi-row precision seed-drill (not shown).

The precision seed drill comprises a toolbar mounted on the hitch links of an agricultural tractor by means of the usual A-frame and extending transversely with respect to the direction of operative forward motion of the drill. Mounted on the toolbar at laterally spaced intervals along its length are 4, 6 or more individual row units each of which is supported on and pulled by the toolbar and each of which is operative to select seeds one at a time in sequence from a seed reservoir and to deliver the seeds one at a time to a furrow opened in the soil by the coulter, whereupon the furrow is closed by a press wheel, and this completes the drilling operation.

Thus, each row unit comprises a seed reservoir or hopper which feeds seeds to a cell-wheel type seed selection mechanism from which seeds are dropped into the furrow opened by coulter 10, after which a press wheel (not shown) closes the furrow.

Coulter 10 comprises a nose portion 12 mounted on the body of the row unit by means of a forward pivot aperture 14. The coulter further comprises a body portion 16 extending longitudinally with respect to the direction F of forward travel of the drill.

Coulter 10 further comprises a rear portion 18 which is open-bottomed whereby seeds 20 from the seed selection mechanism can be deposited in the bottom 22 of a furrow 24, the seeds being released in the direction indicated by arrow 26 and lying on bottom 22 at equally spaced intervals.

Coulter 10 and its body portion 16 are formed as a metallic structure, specifically an iron forging, having a relieved region or zone 28 in the wearing region 30 at the bottom of the coulter.

An insert or coulter portion 32 comprising ceramic material is mounted in relieved zone 28 and is formed to provide a soil-engaging surface 34 of the coulter in the wearing region 30. The profile of insert 32 comprises a curved portion 36 of relatively large radius of curvature and forming the leading edge of the furrow-opening portion of the coulter, and a portion 38 of relatively small radius of curvature at the trailing end of the furrow-opening portion of the coulter.

Insert 32 is formed as a solid moulded member having the side-elevation profile shown in Fig. 1. The profile of the insert along its furrow-forming front edge 40, as viewed in the direction V1 is substantially V-shaped for furrow-opening purposes. In other words, edge 40 is comparatively narrow in width (measured laterally with respect to direction F) and widens in the rearward direction. Along the rear or trailing edge 42 of insert 32, the insert has a flat or slightly rounded surface for furrow-bottom formation purposes.

Along its two straight edges 44, 46, insert 32 is substantially flat for co-operation with the corresponding flat metallic surfaces of coulter body portion 16, to which it is bonded.

For normal usage, the bonding technique employed comprises using an epoxy resin such as the resin sold by Ciba-Geigy under reference number 2007 (which cures at 150° Centigrade in one hour) or under reference number 2005 (which cures at 20°C Centigrade to 100° Centigrade). Alternatively, the bonding agent known as AV138 which cures at ambient temperature and also has gap-filling properties to provide a good blend between the ceramic and the coulter, may be employed.

Alternatively, for maximising the adhesion between the insert and the coulter body portion, the machined surface of the body portion is first shot-blasted to produce a gap of 0.006 inches (0.01524 centimetres) between it and the insert 32. Then the insert is bonded to the coulter body with the epoxy resin followed by heat treatment.

In use, coulter 10 performs substantially as a conventional metal-only coulter with the difference that the performance of the coulter remains the same as that of a new coulter for a period at least five times longer than usual.

The life of a conventional coulter is limited to a certain number of hundreds of acres due to the rapid wear discussed in detail above. Initial indications for coulter 10 suggest that its life expectancy is increased by from five to fifteen times as compared with a conventional coulter.

In the embodiment of Fig. 2, the precision seed drill is otherwise similar to that of Fig. 1 but comprises a belt-type seed selection mechanism such as that of the well known Stanhay S870 precision seed drill.

Each row unit comprises a coulter 50 which is otherwise arranged with respect to the drill and its row unit as described above in relation to Fig 1.

Coulter 50 has a different profile from coulter 10, being a metallic structure provided with a relieved region or zone 52 in the forward wearing region of the coulter, and provided with an insert or coulter portion 54 in the form of a tapered nose in the relieved zone, the insert comprising a ceramic material and being formed to provide the soil engaging surface of the coulter in the wearing region.

Coulter 50 has a linear leading edge 56 formed, in part, by insert 54 and the profile of the leading edge, as viewed from the front is substantially V-shaped. The lower surface 58 of the coulter is substantially flat or slightly rounded.

Insert 54 is bonded to the coulter body portion 60 substantially as described above in relation to the Fig 1 embodiment and in-use the coulter operates in substantially the same way as that embodiment.

Among the modifications which could be made in the above-described embodiments while remaining within the scope of the invention are changes to the shape and form both of the coulter body portion and the corresponding insert. Considerable variation in the details of the ceramic material may be employed while retaining the hard wearing characteristics thereof. Likewise, many alternative bonding agents may be employed or alternative mechanical fastening techniques to secure the insert to the coulter.

In the embodiment of Figs. 3 to 5 coulter 70 is generally similar in structure to coulter 10 of Fig 1 but comprises a solid body portion 72 in the form of an iron forging having spaced coulter side plates 74, 76 secured thereto. Body portion 72 is formed with a relieved region or zone 78 in its wearing region 80.

An insert or coulter portion 82 of ceramic material is mounted in relieved region or zone 78.

As shown in Fig 5 insert 82 is secured by a layer 84 of bonding agent to the coulter body portion 72 and side plates 74, 76.

Insert 82 comprises a ceramic material in the form of aluminium oxide. The insert is produced by a process of controlled ball milling and spray drying followed by forming by means of die pressing, firing in a kiln and subsequent grinding. An example of a ceramic material suitable for the purpose is that available under the trade mark Deranox 975 which is available from Anderman and Ryder Limited of East Molesey, Surrey. Equivalent alternative ceramic materials may equally be used.

In the embodiment of Figs. 6 to 9 coulter 90 has a relieved region or zone 92 and is provided with an insert or coulter portion 94 in the form of a tapered nose of ceramic material shaped and formed to provide the soil engaging surface of the coulter in its wearing region.

As shown in Figs 7 and 8, insert 94 is secured by a layer 96 of bonding agent to the side and base plates 98, 100 and 102 of the coulter.

**Claims**

1. A soil engaging member of a tillage tool comprising a metallic body portion (16) and a portion of ceramic material (32, 54, 82, 94) provided in a wearing region (30) of the soil engaging member, characterised in that said soil engaging member is a coulter (10, 50, 70, 90) for a precision seed drill and having said metallic body portion (16) in the form of a forward (with respect to the travel direction F) furrow forming portion which extends lengthwise with respect to the furrow (24) opened by the coulter (10, 50, 70, 90) in the soil in use, and said furrow forming portion of the coulter being formed as a single metallic structure with a hollow structured rear portion (18) of the coulter (10, 50, 70, 90) which is open-bottomed to permit release of seeds (20) therethrough onto the bottom (22) of said furrow (24) opened by the furrow forming portion, and the coulter (10, 50, 70, 90) having, in its working attitude, a side elevation profile including an upwardly extending furrow forming front edge (40), said furrow forming front edge having a substantially V-shaped cross-section in a horizontal plane, and said portion (32, 54, 82, 94) of ceramic material itself providing the soil engaging surface of said wearing region (30) of the coulter (10, 50, 70, 90) and thus itself providing the forward extremity of said V-section furrow forming front edge (40) in said wearing region (30) of the coulter, and the remainder of the surface area of said wearing region of the coulter on the upper and rearward side of said portion of ceramic material as seen in said side elevation profile and with respect to the working attitude and direction (F) of travel of the coulter in use, being provided by said metallic body portion, and said metallic body portion serving to define a relieved region (28, 52, 78, 92) of the profile of the coulter (10, 50, 70, 90) in which said portion of ceramic material is received, and the surfaces which define said region, as seen in side elevation profile, providing direct support for the inner periphery of said portion of ceramic material (32, 54, 82, 94) against upwardly and rearwardly directed soil forces arising during use, and said surfaces being secured to the ceramic material in face-to-face bonded relationship across the lateral width of the coulter, said support thus being provided only along the said inner part of the periphery of said portion of ceramic material while the remainder thereof, namely the outer part of the periphery thereof, is unsupported and provides said V-section furrow forming front edge (40).

2. A soil engaging member according to claim 1 characterised in that said upwardly extending furrow forming front edge (40) of the coulter also extends forwardly with respect to the direction of travel of the coulter in use, and said relieve region (28, 78) of the metallic coulter body portion (16, 72) has an inwardly extending front edge (44) located between the ends of the furrow forming front edge of the coulter.

3. A soil engaging member according to claim 2 characterised in that said portion (32) of ceramic material extends lengthwise of the coulter metallic body portion (16) and generally downwards from said inwardly extending front edge (44) of said region.

4. A soil engaging member according to claim 3 characterised in that said portion (32) of ceramic material has an outer periphery including a smoothly curved portion (36).

5. A soil engaging member according to any one of claims 2 to 4 characterised in that the joint between said ceramic portion (32) and said metallic coulter body portion (16) at the front edge (44) of said region provides a smooth continuation of the furrow forming front edge (40) of the coulter.

6. A soil engaging member according to claim 5 characterised in that, the soil-engaging surface of said ceramic portion (32) stands proud with respect to the contour of said metallic body portion.

7. A soil engaging member according to claim 1 characterised in that said coulter profile includes a generally V-shaped forward nose portion, and said inserted portion of ceramic material (54) forms at least part of said nose portion.

8. A soil engaging member according to claim 7 characterised in that said furrow forming front edge (56) of the coulter and a lower edge of the coulter defines said generally V-shaped portion of said profile, and said portion (54) of ceramic material provides the forward portion thereof.

**Patentansprüche**

1. Mit dem Erdboden in Eingriff kommendes Element eines Feldbestellungsgerätes mit einem metallischen Körperteil (16) und einem Teil aus keramischem Material (32, 54, 82, 94), das in einem Verschleißbereich (30) des mit dem Erdboden in Eingriff kommenden Elements vorgesehen ist, dadurch gekennzeichnet, daß dieses mit dem Erdboden in Eingriff kommende Element ein Pflugmesser (10, 50, 70, 90) für eine Präzisionskorndrillmaschine ist und diesen metallischen Körperteil (16) in Form eines (bezogen auf die Laufrichtung F) vorderen Furchenbildungsteils aufweist, der sich in Längsrichtung, bezogen auf die Furche (24), erstreckt, die durch das Pflugmesser (10, 50, 70, 90) im Betrieb im Erdboden geöffnet wurde und dieser Furchenbildungsteil des Pflugmessers als einzelne metallische Konstruktion mit einem hohl konstruierten rückwärtigen Teil (18) des Pflugmessers (10, 50, 70, 90) aufgebildet ist, der einen offenen Boden zur Freisetzung der Samen (20) hierdurch auf den Boden (22) der Furche (24) hat, die durch den Furchenbildungsteil geöffnet wurde und das Pflugmesser (10, 50, 70, 90) in seiner Arbeitsstellung ein Seitenansichtsprofil mit einer nach oben reichenden Furchen bildenden Vorderkante (40) hat und diese Furchen bildende Vorderkante über einen im wesentlichen V-förmigen Querschnitt in der Horizontalebene verfügt und dieser Teil (32, 54, 82, 94) aus keramischem Material selbst die Bodeneingriffsfläche dieses Verschleißbereichs (30) des Pflugmessers (10, 50, 70, 90) liefert und so selbst das vordere Ende der die Furche bildenden Vorderkante (40) mit V-Querschnitt in diesem Verschleißbereich (30) des Pflugmessers schafft und der Rest des Oberflächenbereichs dieses Verschleißbereichs des Pflugmessers auf der oberen und rückwärtigen Seite dieses Teils aus keramischem Material, in diesem Seitenansichtsprofil gesehen und bezogen auf die Arbeitsstellung und Richtung (F) des Pflugmessers im Betriebslauf, durch diesen metallischen Körperteil gebildet ist, und dieser metallische Körperteil dazu dient, als Freisetzungsbereich (28, 52, 78, 92) des Profils des Pflugmessers (10, 50, 70, 90) zu dienen, in welchem Teil dieser Teil aus keramischem Material aufgenommen wird und die Flächen, die diesen Bereich im Seitenansichtsprofil gesehen, bilden, eine direkte Abstützung für den Innenumfang dieses Teils aus keramischem Material (32, 54, 82, 94) gegen nach oben und hinten gerichtete Erdbodenkräfte, die während des Betriebs auftreten, liefern und diese Flächen am keramischem Material in Fläche-Flächebindung quer über die seitliche Breite des Pflugmessers befestigt sind, wobei diese Abstützung so nur längs des inneren Teils des Umfangs dieses Teils aus keramischem Material vorgesehen ist, während dessen Rest, nämlich der äußere Teil von dessen Umfang nicht abgestützt ist und diese Furchenbildungsvorderkante (40) mit V-Querschnitt hierdurch bildet.

2. Mit dem Erdboden in Eingriff kommendes Element nach Anspruch 1, dadurch gekennzeichnet, daß diese nach oben reichende Furchen bildende Vorderkante (40) des Pflugmessers auch nach vorne, bezogen auf die Laufrichtung des Pflugmessers, im Betrieb sich erstreckt und dieser entlastete Bereich (28, 78) des metallischen Pflugmesserkörperteils (16, 72) eine nach innen reichende Vorderkante (44) hat, die zwischen den Enden der Furchen bildenden Vorderkante des Pflugmessers positioniert ist.

3. Mit dem Erdboden in Eingriff kommendes Element nach Anspruch 2, dadurch gekennzeichnet, daß dieser Teil (32) des keramischen Materials in Längsrichtung des metallischen Körperteils (16) des Pflugmessers und im allgemeinen nach unten von der nach innen sich erstreckenden Vorderkante (44) dieses Bereichs sich erstreckt.

4. Mit dem Erdboden in Eingriff kommendes Element nach Anspruch 3, dadurch gekennzeichnet, daß dieser Teil (32) aus keramischem Material über Außenumfang mit einem glatt gekrümmten Teil (36) verfügt.

5. Mit dem Erdboden in Eingriff kommendes Element nach einem der Ansprüche 2 bis 4, dadurch gekennzeichnet, daß die Verbindung zwischen diesem keramischen Teil (32) und diesem metallischen Körperteil des Pflugmessers (16) an der vorderkante (44) dieses Bereichs für eine kontinuierliche Fortsetzung der Furchen bildenden Vorderkante (40) des Pflugmessers sorgt.

6. Mit dem Erdboden in Eingriff kommendes Element nach Anspruch 5, dadurch gekennzeichnet, daß die mit dem Erdboden in Eingriff kommende Fläche dieses keramischen Teils (32), bezogen auf den Umfang von diesem metallischen Körperteil, absteht.

7. Mit dem Erdboden in Eingriff kommendes Element nach Anspruch 1, dadurch gekennzeichnet, daß dieses Pflugmesserprofil einen im wesentlichen V-förmigen verderen Nasenteil umfaßt und daß dieser eingesetzte Teil aus keramischem Material (54) wenigstens einen Teil dieses Nasenteils bildet.

8. Mit dem Erdboden in Eingriff kommendes Element nach Anspruch 7, dadurch gekennzeichnet, daß diese Furchen bildende Vorderkante (56) des Pflugmessers und eine untere Kante des Pflugmessers diesen im wesentlichen V-förmigen Teil dieses Profils bildet und dieser Teil (54) aus keramischem Material den vorderen Teil hiervon bildet.

## Revendications

1. Organe d'attaque du sol d'un outil de culture, comprenant un corps métallique (16) et une partie en matière céramique (32, 54, 82, 94) prévue dans une région d'usure (30) de l'organe d'attaque du sol, caractérisé en ce que ledit organe d'attaque du sol est un coutre (10, 50, 70, 90) pour un semoir de précision et ledit corps métallique (16) est sous la forme d'une partie avant (par rapport à la direction de déplacement F) de formation de sillon qui s'étend longitudinalement par rapport au sillon (24) ouvert par le coutre (10, 50, 70, 90) dans le sol en utilisation, ladite partie de formation de sillon du coutre étant sous la forme d'une structure métallique unique à partie arrière de structure creuse (18) du coutre (10, 50, 70, 90) dont le fond est ouvert pour permettre le dépôt des graines (20) à travers cette ouverture sur le fond (22) dudit sillon (24) ouvert par la partie de formation de sillon, le coutre (10, 50, 70, 90) ayant, dans sa position de travail, un profil en vue de côté comprenant un bord avant de formation de sillon (40) qui s'étend vers le haut, ledit bord avant de formation de sillon ayant une section transversale sensiblement en forme de V dans un plan horizontal, ladite partie (32, 54, 82, 94) en matière céramique constituant elle-même la surface d'attaque du sol de la dite région d'usure (30) du coutre (10, 50, 70, 90) et constituant ainsi elle-même l'extrémité avant dudit bord avant de formation de sillon à section en V (40) dans ladite région d'usure (30) du coutre, le reste de la surface de ladite région d'usure du coutre du côté supérieur et à l'arrière de ladite partie en matière céramique vue dans ledit profil de côté et par rapport à la position de travail et à la direction (F) de déplacement du coutre en utilisation étant constitué par ledit corps métallique, ledit corps métallique servant à définir une région échancrée (28, 52, 78, 92) du profil du coutre (10, 50, 70, 90) dans laquelle ladite partie en matière céramique est reçue, les surfaces qui définissent ladite région, vues dans ledit profil de côté, procurant un support direct pour la périphérie intérieure de ladite partie en matière céramique (32, 54, 82, 94) contre les forces engendrées par le sol vers le haut et vers l'arrière pendant l'utilisation, et lesdites surfaces étant fixées à la matière céramique par une liaison face-à-face sur la largeur latérale du coutre, ledit support étant ainsi prévu seulement le long de ladite partie intérieure de la périphérie de ladite partie en matière céramique tandis que le reste de celle-ci, c'est-à-dire la région extérieure de sa périphérie, est non supporté et présente le dit bord avant de formation de sillon à section en V (40).

2. Organe d'attaque du sol suivant la revendication 1, caractérisé en ce que ledit bord avant de formation de sillon (40) du coutre, s'étendant vers le haut, s'étend également vers l'avant par rapport à la direction de déplacement du coutre en utilisation, et ladite région échancrée (28, 78) du corps métallique (16, 72) du coutre présente un bord avant s'étendant vers l'intérieur (44) situé entre les extrémités du bord avant de formation de sillon du coutre.

3. Organe d'attaque du sol suivant la revendication 2, caractérisé en ce que ladite partie (32) en matière céramique s'étend dans la direction longitudinale du corps métallique (16) du coutre et sensiblement vers le bas à partir dudit bord avant s'étendant vers l'intérieur (44) de ladite région.

4. Organe d'attaque du sol suivant la revendication 3, caractérisé en ce que ladite partie (32) en matière céramique a une périphérie extérieure comportant une région régulièrement incurvée (36).

5. Organe d'attaque du sol suivant l'une quelconque des revendications 2 à 4, caractérisé en ce que la jonction entre ladite partie en céramique (32) et ledit corps métallique (16) du coutre à l'endroit du bord avant (44) de ladite région assure une continuité régulière du bord avant de formation de sillon (40) du coutre.

6. Organe d'attaque du sol suivant la revendication 5, caractérisé en ce que la surface d'attaque du sol de ladite partie céramique (32) fait saillie par rapport au contour dudit corps métallique.

7. Organe d'attaque du sol suivant la revendication 1, caractérisé en ce que ledit profil du coutre comprend une région de nez avant sensiblement en forme de V, et ladite partie insérée en matière céramique (54) constitue au moins une partie de ladite région de nez.

8. Organe d'attaque du sol suivant la revendication 7, caractérisé en ce que ledit bord avant de formation de sillon (56) du coutre et un bord inférieur du coutre définissent ladite région sensiblement en forme de V dudit profil, et ladite partie (54) en matière céramique constitue sa région avant.

FIG.1

EP 0 202 229 B1

FIG.2

74   76

72

FIG.4

82

74   76

84

72   82

FIG.5

74

70

A

A

72

78

82   80

FIG.3

FIG.6

FIG.7

FIG.8

FIG.9